# FASCICULE DE BREVET EUROPEEN

(11) **EP 1 172 175 B1**
(45) Date de publication et mention de la délivrance du brevet: **29.06.2011**
(21) Numéro de dépôt: 01401816.2
(22) Date de dépôt: 06.07.2001
(51) Int. Cl.: B23Q 37/00, B23Q 1/50, B23Q 16/00

(54) **Système de modularité applicable au bélier-tête d'une fraiseuse**
Modulares System zum Gebrauch mit der Antriebsvorrichtung und dem Kopf einer Fräsmaschine
Modular system for use in the drive means and head of a milling machine

(30) Priorité: 06.07.2000 ES 200001665
(43) Date de publication de la demande: 16.01.2002
(73) Titulaire: Soraluce, S. Coop, 20570 Bergara (Guipuzcoa) (ES)
(72) Inventeur: Angel Ma Mendia Olabarria, Eibar (Guipuzcoa) (ES)
(74) Mandataire: Thévenet, Jean-Bruno

(56) Documents cités:
- FR-A- 2 687 338
- US-A- 4 709 465
- US-A- 5 584 621

## Description

Dans les solutions actuelles des fraiseuses, centres de fraisage et machines-outils analogues, l'outil est disposé dans une tête qui, normalement est disposée à l'extrémité d'une partie appelée bélier ou "Ram".

Selon des réalisations déjà connues, est disposée, le long du bélier, une barre longitudinale de transmission qui est actionnée en rotation au moyen d'un moteur qui s'appelle moteur principal et qui est situé dans la partie arrière du bélier. Cette barre de transmission actionne finalement l'outil de fraisage, placé dans la tête, par l'intermédiaire d'un système d'engrenages qui sont placés à l'intérieur de la tête (voir par exemple FR-A-2 687 338).

Selon les réalisations les plus habituelles, ce moteur principal situé dans la partie arrière du bélier est disposé à l'extérieur du bélier et, au moyen d'une réduction appropriée, par l'intermédiaire d'une boîte de vitesses et des poulies et courroies crantées respectives, il communique son mouvement à la barre longitudinale de transmission située à l'intérieur du bélier, laquelle actionne finalement l'outil de fraisage au moyen d'engrenages situés dans la tête.

D'un autre côté, et comme les processus de travail actuels exigent un mouvement multiaxial de la tête, soit pour disposer l'outil dans chaque cas selon la position sélectionnée, soit, y compris, pour déplacer l'outil selon ce qu'il travaille, dans le déroulement, par exemple, de trajectoires de travail curvilignes ou à lignes mixtes, on connaît déjà la disposition de pivots de rotation pour le positionnement correct de la tête. Le pivot de rotation arrière peut être placé soit dans la tête elle-même, soit il peut se loger à l'intérieur du bélier. Le pivot de rotation avant, dans le cas où il existe, se loge toujours dans la tête, de manière que le positionnement de la tête puisse s'effectuer des deux manière suivantes :
I - au moyen du moteur principal situé dans la partie arrière du bélier, après déblocage préalable du corps de la tête qui correspond à la rotation désirée.
II- au moyen de servomoteurs de positionnement placés à cette fin et qui, au moyen de la transmission mécanique correspondante et avec une réduction déterminée, font tourner le corps de la tête qui correspond à la rotation désirée.

Des exemples de ces têtes sont visibles dans le brevet des Etats-Unis n° 5 257 883, de la firme Jobs S. p. A. dans les modèles d'utilité espagnols 08800942 et 08800943 de la même titulaire.

Dans le brevet des Etats Unis n° 4 709 465 de la firme Ingersoll, on décrit une solution pour le montage rapide de différents types de têtes dans un même bélier ou "Ram".

D'un autre côté, l'évolution technique des servomoteurs et des moteurs électriques en général a donné naissance à l'application, dans les machines en général et dans les machines-outils en particulier, de ce qui est connu sous la désignation de moteurs directs "direct drive motor".

C'est ainsi que, par exemple, en 1984, il a été demandé le brevet des Etats Unis n° 4 614 099 qui traite d'une machine-outil, et plus précisément d'une machine à laminer à cylindres qui présente la particularité consistant en ce que l'actionnement des arbres moteurs des cylindres de laminage s'effectue au moyen de moteurs électriques directement accouplés aux arbres moteurs précités des cylindres de laminoirs.

Dans le secteur de la robotique, on applique aussi ces moteurs directs, comme c'est le cas dans les brevets des Etats Unis n° 4 702 668, 5 528 955 et 5 672 924.

Dans le brevet Japonais n° 61242369 de Mitsubishi, on décrit une tête rotative pour machine à souder qui utilise des moteurs directs et dont la disposition et les mouvements multiaxe sont totalement en coïncidence avec ceux que doit présenter et réaliser la tête d'une fraiseuse actuelle.

Le brevet japonais n° 63295143 demandé en 1987 par la société Mitsubishi précitée décrit aussi une solution multiaxe pour la tête d'une machine outil qui utilise des moteurs directs.

Finalement, le brevet européen n° 885081 de Bertsche Engineering Corp, déposé avec priorité des Etats Unis du 13.06.95 décrit l'application de moteurs directs à une tête multiaxe, d'une fraiseuse, dans une solution analogue à celle décrite par le modèle d'utilité espagnole 9801138.

Selon la présente invention, on a conçu un système pour l'assemblage du bélier et de la tête d'une fraiseuse qui présente le particularités suivantes :
1. A l'intérieur du bélier ou "Ram" lui-même, est disposé le moteur principal qui est accouplé à la barre ou à l'arbre de transmission de puissance par l'intermédiaire d'une boîte de vitesses, en éliminant ainsi les poulies et les courroies de transmission traditionnelles, en même temps que le moteur principal n'est pas visible dans la partie arrière du bélier, puisqu'il est intégré à l'intérieur de celui-ci.
2. Le bélier ou "Ram" comprend en outre intérieurement le pivot arrière de rotation de la tête avec moteur direct intégré. Ce moteur direct, de couple élevé et de gamme de vitesses basse, se trouve dans une disposition concentrique au pivot arrière de rotation et coaxiale à l'arbre de transmission de puissance. De cette façon, le système de positionnement du pivot arrière de la tête est logé dans le bélier et, en supplément, on obtient cette rotation arrière de la tête sans aucune réduction ni transmission intermédiaire.
   Le système peut aussi présenter les particularités suivantes.
3. Le bélier présente, en correspondance réciproque avec une gamme de têtes différente, une solution de fixation rapide et de solutions pour le raccordement des conduits correspondants, hydrauliques et de réfrigérant, ainsi que des connecteurs électriques respectifs.
   La solution de fixation rapide est obtenue au moyen d'une série de tirants normalisés situés de la même façon dans les différentes têtes et de pinces à actionnement hydraulique, constituant une partie plus complexe, placées seulement dans le bélier ; de sorte que le bélier et la tête qui lui correspond dans chaque cas sont deux modules indépendants, en conférant ainsi au bélier une condition de modularité, puisqu'il sera toujours le même, indépendamment de la tête de fraisage qui est montée dans chaque cas.
   Le changement de tête peut s'effectuer de façon manuelle, semi-automatique ou automatique.
4. La rotation du pivot avant de la tête s'effectue dans la tête elle-même, par l'intermédiaire d'un moteur direct incorporé dans la tête elle-même ; de sorte qu'on parvient à constituer ainsi une tête multiaxe.

Finalement, le mouvement de l'outil peut s'effectuer de deux façons différentes :
- Pour les têtes à transmission mécanique au moyen du moteur principal intégré dans la partie arrière du bélier.
- Pour les têtes à électrobroche au moyen d'un moteur direct situé dans la tête.

Ces caractéristiques générales du système proposé maintanant peuvent être complétées par d'autres plus particulières, qui sont:
a) que le pivot arrière de rotation de la tête, situé dans le bélier, possède un système de freinage du type à disque, de sorte que, lorsqu'on désire positionner le pivot arrière de rotation de la tête dans une position déterminée, le système hydraulique entrera en action en débloquant le frein et en permettant la rotation du pivot arrière au moyen d'un roulement axial de grand diamètre, pour revenir le bloquer une fois qu'on a atteint la position angulaire sélectionnée. Le fait de ne pas disposer de couronnes dentées qui sont nécessaires dans d'autres systèmes des freinage, permet que le positionnement du pivot arrière de rotation de la tête ait des positions angulaires illimitées.
b) que le moteur principal, intégré dans le bélier pour mettre l'arbre de transmission en mouvement et provoquer la rotation de l'outil dans les têtes à transmission mécanique, est refroidi. Sont également refroidis, la boîte de réduction ou de vitesses et les roulements correspondants de l'arbre de transmission.
   De même, dans la tête, l'outil peut disposer facultativement d'un refroidissement et le moteur direct du pivot de rotation arrière est refroidi, ce qui donne à l'ensemble du bélier etde la tête des conditions de travail optimales, en ce qui concerne l'élimination de la chaleur produite pendant la phase de travail.
c) L'incorporation d'un compteur ou "codeur" qui contrôle directement aussi bien la vitesse de rotation que la position angulaire de la broche porte-outil pour son application aussi bien dans le changement automatique de la tête que dans le changement de l'outil. De cette façon, et en tenant compte du fait que la transmission de puissance s'effectue sans aucune réduction, le compteur prend la mesure de la vitesse de rotation et de la position, directement sur l'arbre de transmission, en évitant de les relever sur l'arbre de rotation du moteur qui actionne l'outil avant la réduction pertinente, comme cela se fait traditionnellement.
d) Dans la zone centrale de l'intérieur du bélier, se trouve un ingénieux dispositif de rassemblement des nombreux conduits hydrauliques et de réfrigérant. Ce dispositif constitue le point de départ de tous les circuits hydrauliques ou de réfrigérant qui aboutissent aux différentes parties constructives de la tête, que ce soit au moyen de conduits flexibles ou au moyen des conduits rigides.
e) La disposition, à l'intérieur du bélier, d'une pièce présentant la forme d'une grande bague étagée qui exerce des fonctions de guide pour le montage du moteur principal et de sa boîte de réduction à l'intérieur du bélier.
   Toutes ces caractéristiques ainsi que d'autres que l'on verra plus en détail dans la suite du mémoire numérique, différencient la solution proposée actuellement d'autres déjà connues, en lui donnant une vie propre.

La Figure 1 montre une vue en élévation et schématique d'un bélier (1.1) auquel est accouplée une tête (1.2) selon la solution proposée maintenant.

La Figure 2 montre une vue en coupe longitudinale du bélier (1.1) où l'on a schématisé ces composants en retirant les conduits pour les fluides et les câbles de liaison électrique afin de pouvoir apprécier plus clairement les différentes parties constitutives.

La Figure 3 est une vue de la coupe III-III indiquée sur la figure 4 du bélier (1.1), où le bélier (1.1) comprend maintenant les câbles de liaison électrique (20), les conduits (16.1) pour les fluides, les conduits (16.2) pour câbles électriques, ainsi que les connecteurs électriques correspondants (14) et les raccordements rapides (16.3).

La Figure 4 montre la vue en plan de dessous du bélier (1.1), selon la flèche F4 qui est indiquée sur la figure 3.

La Figure 5 correspond à la vue en plan de dessus du bélier (1), selon la flèche F5 indiquée sur la figure 3.

La Figure 6 montre la coupe VI-VI qui est indiquée sur la Figure 3.

La Figure 7 montre une vue en élévation et en partie en coupe d'une tête (1.2)

La Figure 8 correspond à la vue de la tête (1.2) selon la flèche F8 indiquée sur la figure 7.

La Figure 9 montre une vue d'une tête (1.2) comme celle de la Figure 7, mais avec un électromandrin.

La Figure 10 est une vue schématique et partiellement en coupe d'une tête (1.2) du type birotatif universel.

La Figure 11 montre la vue selon la flèche F11 qui est indiquée sur la figure 10.

La figure 12 est une vue schématique et en partie en coupe d'une tête (1.2) du type orthogonal automatique.

La Figure 13 montre la vue selon la flèche F13 qui est indiquée sur la figure 12.

La Figure 14 correspond à une vue schématique et en partie en coupe d'une tête (1.2) du type gyroscopique.

La Figure 15 montre la vue selon la flèche F15 qui est indiquée sur la figure 14.

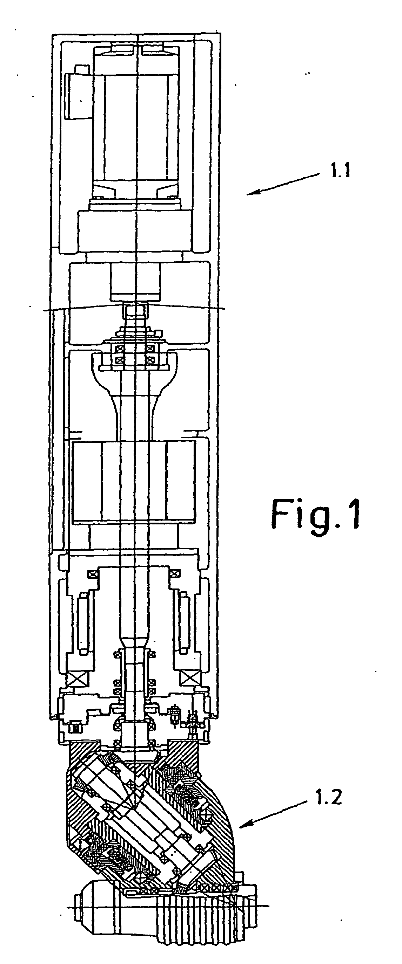

L'objet de la présente invention est un système de modularité et d'actionnement applicable à l'ensemble composé du bélier (1.1) et de la tête (1.2) d'une fraiseuse. (voir Figure 1).

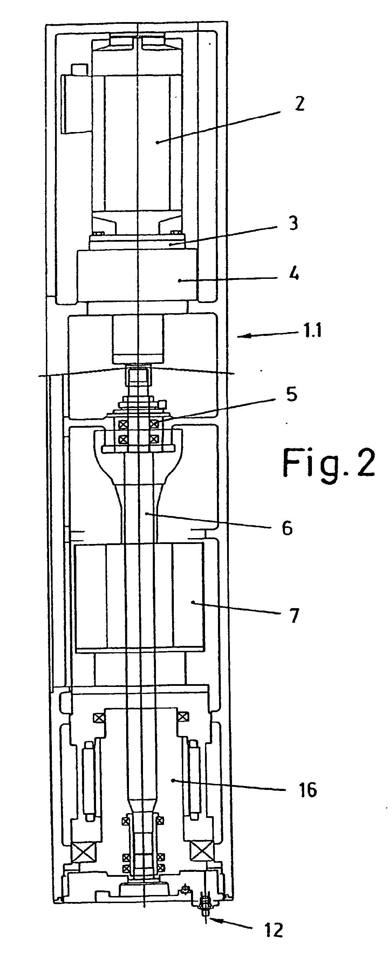

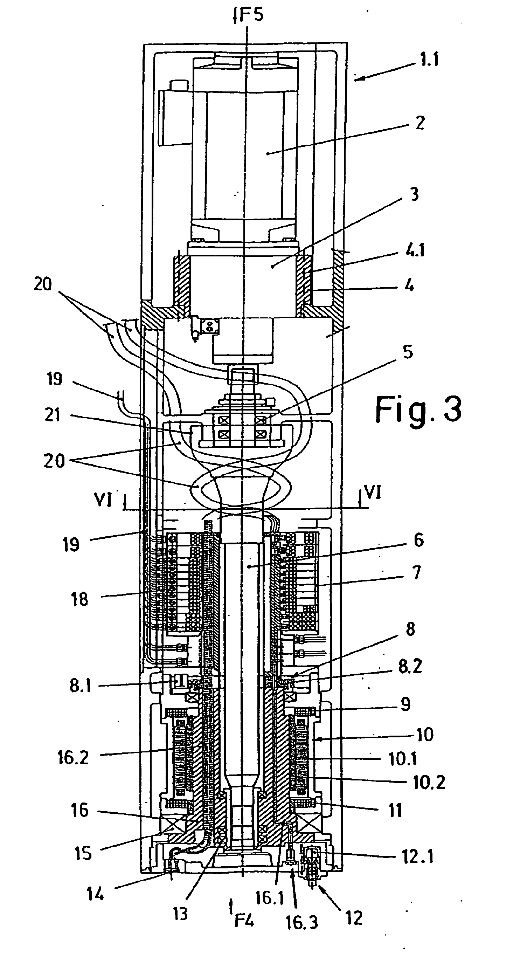

Selon la présente invention, le bélier (1.1), également appelé traditionnellement "Ram" porte intégré intérieurement, un moteur (2) qui est celui appelé habituellement moteur principal et qui est accouplé à la barre ou l'arbre de transmission de puissance (6) au moyen d'un réducteur (3) qui assure les fonctions de boîte de vitesses, voir figures 2 et 3.

Le moteur principal (2) est un moteur classique qui présente al particularité d'être refroidi par l'eau. La boîte de vitesses (3) est une boîte de réduction à hautes performances qui est lubrifiée à l'huile et refroidie au moyen d'un fluide qui peut être indistinctement de l'eau ou de l'huile et qui circule dans une chemise extérieure de la boîte (3).

L'arbre de transmission(6) est supporté dans sa partie arrière au moyen de roulements (5) qui portent une chemise à huile refroidie.

Il est à remarquer de même qu'à l'intérieur du bélier (1.1) est fixée, au moyen de vis (4.1), une pièce (4) en forme de grande bague cylindrique, mais étagée extérieurement pour s'appuyer sur un appui du corps du bélier (1.1). Cette pièce (4) a pour mission de guider le réducteur (3) en facilitant ainsi le montage de l'ensemble formé par le réducteur (3) et le moteur (2), voir figure 3.

L'arbre de transmission (6) est recouvert, dans la zone des roulements (5) d'une enveloppe protectrice (21) autour de laquelle passent les câbles électriques correspondants (20).

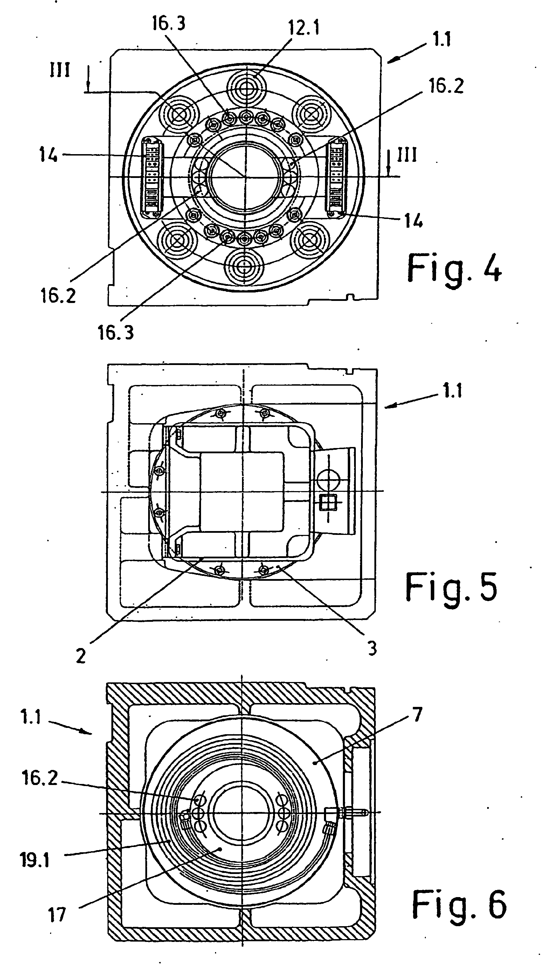

Chacun de ces câbles électriques (20) se divise, à titre d'exemple non limitatif de réalisation pratique, en trois blocs qui traversent des orifices axiaux (16.2) disposés selon deux groupements, chacun de ceux-ci, de trois orifices (16.2), situés en opposition diamétrale, comme on le précise sur les figures 3 et 4.

Ces orifices axiaux (16.2) traversent le pivot arrière de rotation (16) de la tête, de même que des orifices paraxiaux à ceux-ci (16.1) destinés à donner passage aux conduits hydrauliques et de réfrigérant, qui se terminent dans des bouches de raccordement rapide (16.3). Comme on le voit sur les figures 2 et 3, le pivot arrière de rotation de la tête (1.2) est incorporé dans le bélier (1).

Dans la zone médiane du bélier (1.1) se trouvent des conduits rigides (19) qui sont les conduits hydrauliques et de réfrigérant et qui sont raccordés à des réglettes distributrices fixes (18) d'où des conduits flexibles (19.1) partent vers d'autres réglettes réunies à une partie (17) qui tournent avec le pivot arrière (16) (voir figures 3 et 6).Ces conduits flexibles (19.1) sont enroulés en spirale dans des chambres situées dans la pièce désignée par la référence numérique 7, pour permettre ainsi la rotation de la partie rotative par rapport à la partie fixe.

Comme on le voit sur la figure 3, se trouvent aussi dans le pivot arrière de rotation (16) de la tête (1.2) les connecteurs électriques (14) correspondants pour la connexion rapide des câbles qui doivent se diriger vers la tête (1.2).

Comme on l'apprécie sur la figure 3, la partie extrême visible du bélier (1.1) comporte un dispositif de fixation rapide (12) formé par des pinces à actionnement hydrauliques (12.1) situées dans la partie qui correspond au bélier (1.1) et des tirants normalisés (12.2) situés dans les différentes têtes (1.2).

De cette façon, la partie la plus complexe du dispositif de fixation rapide, qui est constituée par les pinces à actionnement hydrauliques (12.1) est située uniquement dans le bélier (1.1) ; tandis que la partie la plus simple, formée par de simples tirants normalisés, est celle qui se répète dans les différentes têtes (1.2).

Avec ce dispositif de fixation rapide, on peut procéder au montage de l'une ou l'autre tête (1.2) d'une façon simple et très rapide, en conférant ainsi un caractère modulaire à l'ensemble du bélier (1.1) et de la tête (1.2).

Comme nous le verrons plus loin, ce changement de têtes (1.2) est applicable à des têtes à transmission mécanique et à des têtes à électrobroche et peut s'effectuer de façon manuelle, semi-automatique ou automatique.

Concentriquement au pivot arrière (16) et coaxialement à l'arbre de transmission (6) est intégré un moteur direct (10) qui est un moteur électrique à courant alternatif "AC" à couple élevé et petite vitesse de rotation.

Le stator de ce moteur (10) est la partie désignée par la référence (10.1) tandis que le rotor est la partie désignée par la référence (10.2).

Au-dessus et au-dessous du moteur (10) sont disposés des ensembles de frein (9 et 11) du type à disque, de sorte que, lorsqu'on désire positionner le pivot arrière (16) de la tête (1.2) dans une position déterminée, le système hydraulique entrera en action en débloquant les freines (9 et 11) et en permettant la rotation du pivot arrière (16) au moyen d'un roulement axial de grand diamètre (15). De cette façon, et au moyen des freins (9 et 11) il devient possible que le positionnement angulaire de l'arbre arrière (16) possède ainsi des positions illimitées.

Sur la Figure 3, on comprend comment, en combinaison avec le pivot de rotation arrière (16) de la tête (1.2) est incorporé un compteur ou "codeur" (8) formé d'un lecteur (8.1) et d'une bague de mesure (8.2). Ce compteur (8) contrôle aussi bien la vitesse de rotation que la position angulaire du pivot arrière (16) de positionnement de la tête (1.2).

D'un autre côté, voir figure 3, les roulements (5) de l'arbre de transmission (6) portent un autre compteur ou "codeur" incorporé qui contrôle aussi bien la vitesse de rotation que la position angulaire de la broche, pour son application aussi bien dans le changement automatique de tête (1.2) que dans le changement d'outil. De cette façon, et en tenant compte du fait que la transmission de puissance s'effectue sans aucune réduction, ce compteur ou "codeur" prend la mesure de la vitesse de rotation et de la position directement sur l'arbre de transmission (6) en évitant de la relever sur l'arbre de rotation du moteur principal (2) qui actionne l'outil, avant la réduction pertinente, comme cela est habituel.

Dans la partie avant de l'arbre de transmission (6), il existe un autre paquet de roulements (13) qui, selon une réalisation pratique possible, est dépourvu de refroidissement.

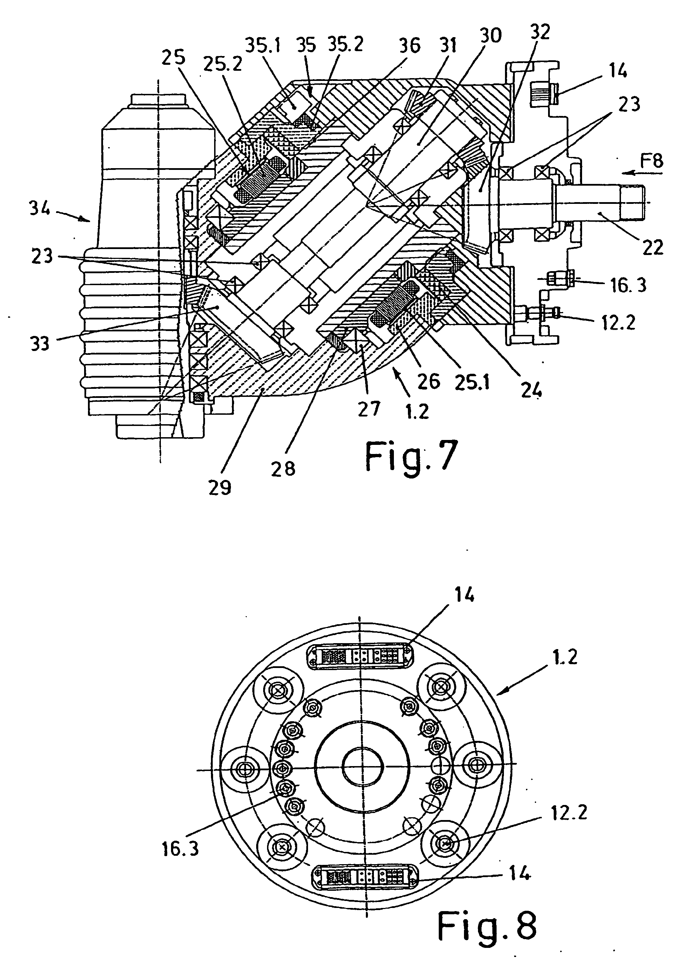

Sur les figures 7 et 8, on représente un exemple possible de tête (1.2) applicable au cas présent. Sur la figure 7, on comprend que la tête (1.2) comporte les tirants normalisé (12.2) de fixation rapide correspondant qui, en combinaison avec les pinces hydrauliques (12.1) du bélier (1.1), permettent le montage et le démontage rapide des têtes (1.2).

De même, on voit les points de raccordement rapide (16.3) pour les conduits hydrauliques et de réfrigérant qui proviennent du bélier (1.1).

Sur la figure 7, on voit aussi comment émerge de la tête (1.2) l'arbre (22) de la tête (1.2) qui doit être entraîné par l'arbre de transmission de puissance (6) du bélier (1.1).

L'arbre 22, par l'intermédiaire d'engrenages coniques (31 et 32), transmet le mouvement à un arbre (30) qui, à son tour et par l'intermédiaire d'un engrenage conique (33) communique la rotation à un mandrin universel (34) où se monte l'outil correspondant, non représenté.

Les roulements (23) des arbres (22 et 30) sont lubrifiés par de l'huile refroidie et tous portent une chemise extérieure refroidie par fluide. De même, l'huile refroidie qui lubrifie les roulements (23) lubrifie aussi les engrenages conquise (31, 32 et 33) ; ce qui, combiné au refroidissement déjà décrit du bélier (1.1) permet d'obtenir les conditions optimales en ce qui concerne l'élimination de la chaleur produite pendant la phase de travail.

Le pivot avant (29) de la tête (1.2) est tourné par un moteur direct qui est un moteur électrique à courant alternatif "AC" à couple élevé et petite vitesse de rotation.

Le moteur direct (25) comprend un rotor (25.1) et un stator (25.2). Le rotor (25,1) est rendu solidaire du pivot avant de rotation (29), cependant qu'entre la partie fixe (28) et la partie mobile (29) est disposé un grand roulement (27) à contrainte radiale et axiale, ce roulement principal (27) étant complété d'un roulement à aiguilles (36).

De même, est disposé un frein à disque (24), de sorte qu'on peut établir des positions angulaires illimitées du pivot avant (29) de rotation de la tête (1.2).

Il existe aussi un compteur ou "codeur" (35) formé d'un lecteur (35.1) et d'une bague de mesure (35.2), pour contrôler aussi bien la vitesse de rotation que la position angulaire du pivot avant (29) de la tête (1.2).

Cette tête (1.2) est une tête à transmission mécanique de la rotation à l'outil. Au lieu de cette tête (1.2), on peut accoupler, au moyen du dispositif de fixation rapide (12), d'autres têtes qui, au lieu d'une transmission mécanique, possèdent une électrobroche.

De même, la tête (1.2) est une tête birotative universelle automatique ayant un plan de rotation incliné à 45° mais on peut aussi accoupler, par exemple, des têtes orthogonales automatiques à deux axes perpendiculaires entre eux ou des têtes gyroscopiques, elles aussi à deux axes perpendiculaires entre eux, et dans leur différentes versions à transmission mécanique, électrobroche, etc.

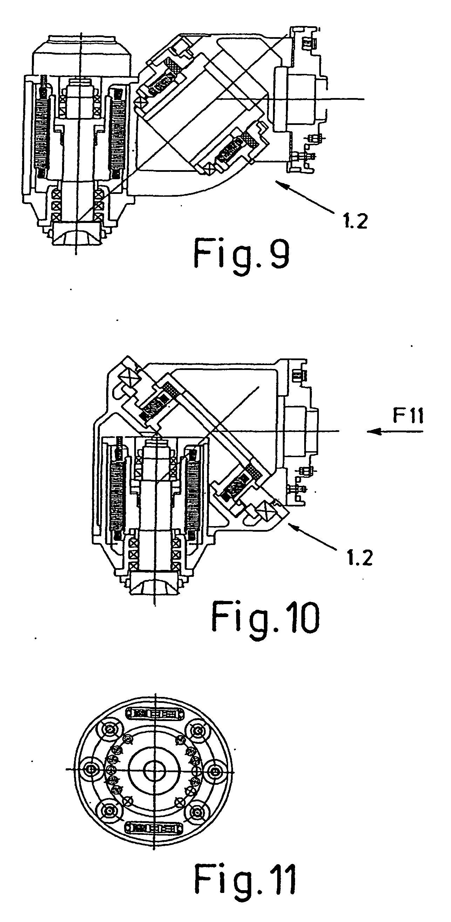

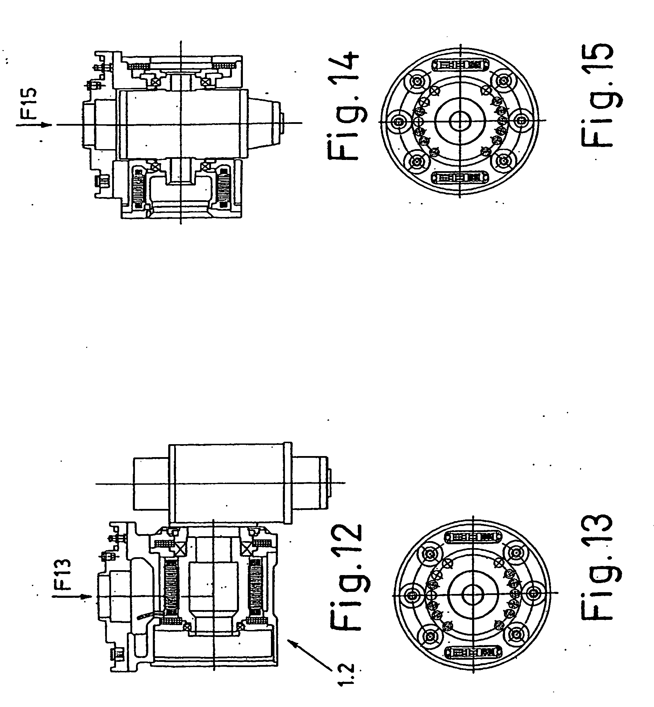

A titre d'exemple non limitatif, on va décrire ci-après, les huit options les plus habituelles :
**A)** - têtes à transmission mécanique
A-1 - tête birotative universelle automatique avec rotation du pivot avant au moyen d'un moteur direct (25). C'est l'exemple représenté sur les figures 7 et 8.
A - 2 - tête birotative universelle automatique avec plan de rotation incliné à 45° avec rotation du pivot avant au moyen de couronnes dentées et lubrifiées par l'huile.
A - 3 - Tête orthogonale automatique avec rotation du pivot avant au moyen d'un moteur direct.
A - 4 - Tête orthogonale automatique avec rotation du pivot avant au moyen de couronnes dentées.
A - 5 - Tête gyroscopiques
B - Têtes à électrobroche
B - 1 - Tête birotative universelle avec rotation du pivot avant au moyen d'un moteur direct et avec électrobroche pour la rotation de l'outil. c'est l'exemple représenté sur les figures 9, 10 et 11.
B - 2 - Tête orthogonale automatique avec rotation du pivot avant au moyen d'un moteur direct et avec électrobroche pour la rotation de l'outil. c'est l'exemple représenté sur les figures 12 et 13.
B - 3 - Tête gyroscopique avec rotation de l'arbre intermédiaire au moyen d'un moteur direct d'un côté (peut aller dans les deux) et avec électrobroche pour la rotation de l'outil. C'est l'exemple représenté sur les figures 12 et 15.

Dans le cas où l'on monte des têtes (1.2) avec électrobroche pour la rotation de l'outil, on peut se dispenser du moteur principal (2) et de la transmission de l'arbre de puissance (6) du bélier (1) ; ou bien les maintenir inopérants lorsqu'on travaille avec des têtes (1.2) munies d'une électrobroche ; c'est le cas pour les machines qui peuvent disposer des deux types de têtes (1.2), à transmission mécanique et à électrobroche.

Dans chaque cas, il s'agit d'une solution modulaire qui permet de monter pratiquement n'importe quel type de tête (1.2) avec le même bélier (1.1) avec une solution très simple de fixation rapide et avec les caractéristiques de freinage, de renvoi de conduit pour les fluides, refroidissement, mesure, etc. qui confèrent à cet ensemble de bélier (1.1) et de tête (1.2) des conditions améliorées par rapport à ceux connus jusqu'à présent.

## Revendications

1. Système de modularité et d'actionnement applicable au bélier-tête d'une fraiseuse, **caractérisé en ce que** le bélier (1.1) renferme intérieurement et à une de ses extrémités un moteur (2) qui est constitué par le moteur principal accouplé, par l'intermédiaire d'un réducteur (3), à un arbre de transmission de puissance (6) ; tandis qu'à son autre extrémité, il porte, également intégré intérieurement, le pivot arrière de rotation (16) de la tête (1.2) ; et **en ce que** le pivot arrière de rotation (16) comporte un moteur à actionnement direct (10) muni de deux ensembles de frein (9 et 11) du type à disque, qui permettent d'obtenir des position angulaires illimitées du pivot arrière (16), et **en ce que** l'arbre de transmission (6) est supporté dans sa partie arrière au moyen de roulements (5) dans lesquels est incorporé un compteur qui contrôle aussi bien la vitesse de rotation que la position angulaire de la broche, en prenant la mesure de la vitesse de rotation et de la position directement sur l'arbre de transmission de puissance (6).

2. Système de modularité et d'actionnement applicable au bélier-tête d'une fraiseuse selon la revendication précédente, **caractérisé en ce que** le bélier (1.1) comporte des pinces à actionnement hydraulique (12.1) ; tandis que, dans la tête (1.2) sont disposés, en correspondance de position avec lesdites pinces (12.1) des tirants normalisés (12.2), en constituant ainsi un dispositif de fixation rapide qui permet le montage et le démontage manuel, semi-automatique ou automatique de différents types de têtes (1.2) sur un même bélier (1.1), et **en ce que** ces pinces hydrauliques (12.1) du bélier (1.1) sont disposées en face de l'extrémité visible du pivot arrière de rotation (16) de la tête (1.2), avec des connecteurs électriques (14) dont les blocs respectifs de câbles conducteurs passent par des orifices (16.2) paraxiaux du pivot arrière de rotation (16) précité, ledit pivot arrière de rotation (16) présentant de même des orifices paraxiaux (16.1) pour les conducteurs hydrauliques et de réfrigérant qui se terminent en des points de raccordement rapide (16.3).

3. Système de modularité et d'actionnement applicable au bélier-tête d'une fraiseuse selon la première et la deuxième revendications, **caractérisé en ce que**, dans la zone médiane du bélier (1.1), parviennent des conduits rigides (19) qui sont les conduits hydrauliques et de réfrigérant, ces conduits étant raccordés à des réglettes distributrices fixes (18) d'où partent d'autres conduits flexibles (19.1) qui aboutissent à d'autres réglettes réunies à une partie (17) qui tourne avec le pivot de rotation arrière (16), lesdits conduits flexibles s'enroulent en spirale dans des chambres situées dans une pièce (7) réunie au pivot de rotation arrière (16).

4. Système de modularité et d'actionnement applicable au bélier-tête d'une fraiseuse selon la première, la deuxième ou la troisième revendication, **caractérisé en ce qu'**à l'intérieur du bélier (1.1) est disposée une pièce (4) ayant la forme d'une grande bague cylindrique qui détermine un étagement dans sa partie extérieure pour s'appuyer sur un appui du corps général du bélier (1.1), et qui est fixée solidairement par des vis (4.1) ; cette pièce (4) assurant des fonctions de guidage et d'appui pour le montage de l'ensemble formé du moteur principal (2) et du réducteur correspondant (3).

5. Système de modularité et d'actionnement applicable au bélier-tête d'une fraiseuse selon une quelconque des revendications précédentes, **caractérisé en ce qu'**il est prévu que, sur un même bélier (1), peuvent se monter des têtes birotatives universelles automatiques ayant un plan de rotation incliné à 45° ; ou bien des têtes orthogonales automatiques, ou des têtes gyroscopiques et tout ceci dans les options à transmission mécanique ou à électrobroche, étant posé dans un cas quelconque que la rotation du pivot avant (29) de la tête (1.2) est commandée par au moins un moteur direct (25) auquel est combiné un frein (24) du type à disque qui permet d'établir des positions angulaires illimitées de la tête (1.2).

6. Système de modularité et d'actionnement applicable au bélier-tête d'une fraiseuse selon une quelconque des revendications précédentes, **caractérisé en ce que** le moteur principal (2) et son réducteur (3) sont refroidis au moyen d'un fluide qui circule dans des chemises enveloppantes de ces derniers, en même temps que les roulements (5) qui supportent la partie arrière de l'arbre de transmission (6) comprennent une chemise de refroidissement, tandis que, dans le cas de têtes (1.2) à transmission mécanique, leurs roulements (23) possèdent aussi une chemise enveloppante refroidie et sont lubrifiés de la même façon que les engrenages correspondants de la transmission, pour parvenir ainsi, avec tout ceci, à l'élimination de la chaleur produite pendant la phase de travail.

## Claims

1. Modularity and driving system applicable to the ram-head of a milling machine, **characterized in that** the ram (1.1) encloses, internally and at one of its ends, a motor (2) which is constituted by the main motor coupled to a power transmission shaft (6) by means of a secondary transmission (3); and at the other end thereof it bears, also integrated internally, the rear rotary shaft (16) of the head (1.2); and **in that** the rear rotary shaft (16) comprises a direct-drive motor (10) provided with two disc-type brake assemblies (9 and 11), which make it possible for the rear rotary shaft (16) to attain unlimited angular positions, and **in that** the rear portion of the transmission shaft (6) is supported by means of bearings (5) which incorporate a counter which monitors not only the rotation speed but also the angular position of the spindle, measuring the rotation speed and angular position directly on the power transmission shaft.

2. Modularity and driving system applicable to the ram-head of a milling machine, according to the preceding claim, **characterized in that** the ram (1.1) comprises hydraulic-actuation grippers (12.1); and, in the head (1.2), standardized pull-rods are disposed in position correspondence with said grippers (12.1), thus constituting a rapid fixing device which enables manual, semiautomatic and automatic mounting and demounting of different types of heads (1.2) on a same ram (1.1), and **in that** these hydraulic grippers (12.1) of the ram (1.1) are disposed opposite the visible end of the rear rotary shaft (16) of the head (1.2), with electric connectors (14) whose respective conductor cable blocks pass through paraxial openings (16.2) of the afore-mentioned rear rotary shaft (16), said rear rotary shaft (16) also presenting paraxial openings (16.1) for the hydraulic and refrigerant conductors which finish in rapid connection points (16.3).

3. Modularity and driving system applicable to the ram-head of a milling machine, according to the first and second claims, **characterized in that** rigid conduits (19), which are the hydraulic and refrigerant conduits, reach the central zone of the ram (1.1), these conduits being connected to fixed distributor guides (18) from which other flexible conduits (19.1) extend to end at other guides integrally-connected to a part (17) which turns with the rear rotary shaft (16), said flexible conduits curl in a coil within chambers located in a part (7) united to the rear rotary shaft (16).

4. Modularity and driving system applicable to the ram-head of a milling machine, according to the first, second or third claim, **characterized in that** inside the ram (1.1) there is disposed a part (4) having the shape of a large cylindrical bushing which defines, in its exterior, a shoulder for positioning on a support of the general body of the ram (1.1) and to which it is integrally fixed by screws (4.1); this part (4) performs guiding and supporting functions for the mounting of the assembly formed of the main motor (2) and the corresponding secondary transmission (3).

5. Modularity and driving system applicable to the ram-head of a milling machine, according to any one of the preceding claims, **characterized in that** it is provided that, on the same head, there can be mounted automatic universal bi-rotational heads having a rotational plane inclined at 45°, or automatic orthogonal heads, or gyroscopic heads, and all in mechanical-transmission or electrospindle options, wherein in each case the rotation of the front rotary shaft (29) of the head (1.2) is driven by at least one direct motor (25) to which there is combined a disc-type brake (24) which allows the head (1.2) to attain unlimited angular positions.

6. Modularity and driving system applicable to the ram-head of a milling machine, according to any one of the preceding claims, **characterized in that** the main motor (2) and its secondary transmission (3) are cooled by means of a fluid which circulates in sleeves enveloping the latter, and the bearings (5) which support the rear portion of the transmission shaft (6) comprise a cooling sleeve, while, in the case of mechanical-transmission heads (1.2), their bearings (23) also have a cooled enveloping sleeve and are lubricated in the same way as the corresponding gears of the transmission, whereby, by virtue of all this, the heat produced during the operating phase is removed.

## Patentansprüche

1. Modular- und Antriebssystem, das auf die Einheit aus Schlitten und Kopf einer Fräsmaschine anwendbar ist, **dadurch gekennzeichnet, daß** der Schlitten (1.1) innen sowie an einem seiner Enden einen Motor (2) einschließt, der von dem Hauptmotor gebildet ist, welcher mittels eines Untersetzungsgetriebes (3) mit einer Leistungsübertragungswelle (6) gekoppelt ist, während er an seinem anderen Ende, ebenfalls im Inneren integriert, die hintere Drehachse (16) des Kopfes (1.2) trägt, und daß die hintere Drehachse (16) einen Motor mit Direktantrieb (10) umfaßt, der mit zwei Bremseinheiten (9 und 11) vom Typ Scheibenbremse ausgestattet ist, die ermöglichen, unbegrenzte Winkelpositionen der hinteren Drehachse (16) zu erhalten, und daß die Übertragungswelle (6) in ihrem hinteren Teil mittels Wälzlagern (5) getragen ist, in die ein Zähler eingebaut ist, der sowohl die Umlaufgeschwindigkeit als auch die Winkelposition der Spindel durch Messen der Umlaufgeschwindigkeit und der Position direkt an der Leistungsübertragungswelle (6) kontrolliert.

2. Modular- und Antriebssystem, das auf die Einheit aus Schlitten und Kopf einer Fräsmaschine anwendbar ist, nach dem vorhergehenden Anspruch, **dadurch gekennzeichnet, daß** der Schlitten (1.1) hydraulisch betätigte Klemmen (12.1) umfaßt, während in dem Kopf (1.2) genormte Ankerbolzen (12.2) mit den Klemmen (12.1) in Lage übereinstimmend angeordnet sind, die somit eine Schnellbefestigungsvorrichtung für diesen bilden, welche die manuelle, halbautomatische oder automatische Montage und Demontage unterschiedlicher Typen von Köpfen (1.2) an einem gleichen Schlitten (1.1) ermöglicht, und daß diese Hydraulikklemmen (12.1) des Schlittens (1.1) gegenüber dem sichtbaren Ende der hinteren Drehachse (16) des Kopfes (1.2), mit elektrischen Verbindern (14) angeordnet sind, deren jeweilige Sätze leitender Kabel achsenparallele Öffnungen (16.2) der vorgenannten hinteren Drehachse (16) durchgreifen, wobei die hintere Drehachse (16) ebenso achsenparallele Öffnungen (16.1) für die Hydraulik- und Kühlmittelleitungen aufweist, die an Schnellverbindungspunkten (16.3) enden.

3. Modular- und Antriebssystem, das auf die Einheit aus Schlitten und Kopf einer Fräsmaschine anwendbar ist, nach dem ersten und dem zweiten Anspruch, **dadurch gekennzeichnet, daß** im mittleren Bereich des Schlittens (1.1) starre Leitungen (19) ankommen, welche die Hydraulik- und Kühlmittelleitungen sind, wobei diese Leitungen mit festen Verteilerleisten (18) verbunden sind, von denen weitere flexible Leitungen (19.1) abgehen, die zu weiteren Leisten führen, welche mit einem Teil (17) verbunden sind, das sich mit der hinteren Drehachse (16) dreht, wobei die flexiblen Leitungen sich in Kammern, die in einem mit der hinteren Drehachse (16) verbundenen Teil (7) gelegen sind, spiralförmig zusammenrollen.

4. Modular- und Antriebssystem, das auf die Einheit aus Schlitten und Kopf einer Fräsmaschine anwendbar ist, nach dem ersten, dem zweiten oder dem dritten Anspruch, **dadurch gekennzeichnet, daß** innerhalb des Schlittens (1.1) ein Teil (4) angeordnet ist, das die Form eines großen zylindrischen Rings aufweist, der in seinem äußeren Teil eine Stufe festlegt, um sich an einer Anlage des Hauptkörpers des Schlittens (1.1) abzustützen, und der mittels Schrauben (4.1) fest angebracht ist, wobei dieses Teil (4) Führungs- und Stützfunktionen für die Montage der Einheit bestehend aus Hauptmotor (2) und entsprechendem Untersetzungsgetriebe (3) sicherstellt.

5. Modular- und Antriebssystem, das auf die Einheit aus Schlitten und Kopf einer Fräsmaschine anwendbar ist, nach einem der vorhergehenden Ansprüche, **dadurch gekennzeichnet, daß** vorgesehen ist, daß an einem gleichen Schlitten (1) universelle automatische birotative Köpfe mit einer um 45° geneigten Rotationsebene oder aber automatische orthogonale Köpfe oder Kreiselköpfe anbringbar sind, und all dies in den Versionen mit mechanischer Übertragung oder mit Elektrospindel, wobei in einem beliebigen Fall angenommen wird, daß die Rotation der vorderen Drehachse (29) des Kopfes (1.2) durch wenigstens einen Direktmotor (25) gesteuert wird, mit dem eine Bremse (24) vom Typ Scheibenbremse kombiniert ist, die ermöglicht, unbegrenzte Winkelpositionen des Kopfes (1.2) festzulegen.

6. Modular- und Antriebssystem, das auf die Einheit aus Schlitten und Kopf einer Fräsmaschine anwendbar ist, nach einem der vorhergehenden Ansprüche, **dadurch gekennzeichnet, daß** der Hauptmotor (2) und sein Untersetzungsgetriebe (3) mittels eines Fluids gekühlt werden, das in umschließenden Mänteln letzterer zirkuliert, ebenso wie die Wälzlager (5), die den hinteren Teil der Übertragungswelle (6) lagern, einen Kühlmantel umfassen, während im Fall von Köpfen (1.2) mit mechanischer Übertragung deren Wälzlager (23) ebenfalls einen gekühlten umschließenden Mantel besitzen und auf die gleiche Weise wie die entsprechenden Zahnräder des Getriebes geschmiert werden, um so mit all dem eine Abführung der während der Arbeitsphase erzeugten Wärme zu erzielen.
